Europäisches Patentamt

European Patent Office

Office européen des brevets

(19)

(11) **EP 1 114 199 B1**

(12) **FASCICULE DE BREVET EUROPEEN**

(45) Date de publication et mention
de la délivrance du brevet:
**09.10.2002  Bulletin 2002/41**

(51) Int Cl.7: **C22C 38/02**, C22C 38/04,
C22C 38/34, C21D 1/32,
C21D 1/78, C22C 38/38,
F16C 33/62, F16C 33/64

(21) Numéro de dépôt: **99932960.0**

(22) Date de dépôt: **23.07.1999**

(86) Numéro de dépôt international:
**PCT/FR99/01815**

(87) Numéro de publication internationale:
**WO 00/006790 (10.02.2000 Gazette 2000/06)**

(54) **ACIER POUR LA FABRICATION D'UNE PIECE POUR ROULEMENT**

STAHL ZUM HERSTELLEN EINES LAGERS

STEEL FOR MAKING A BALL BEARING PART

(84) Etats contractants désignés:
**AT DE ES FI FR GB IE IT SE**

(30) Priorité:  **30.07.1998  FR 9809740**

(43) Date de publication de la demande:
**11.07.2001  Bulletin 2001/28**

(73) Titulaires:
• **Ascometal**
**92800 Puteaux (FR)**
Etats contractants désignés:
**AT DE ES GB IE IT SE**
• **SNR ROULEMENTS**
**F-74010 Annecy (FR)**
Etats contractants désignés:
**DE FR IT**
• **VALTI - Societe Anonyme pour la Fabrication de Tubes Roulements**
**21500 Montbard (FR)**
Etats contractants désignés:
**DE FI FR GB IT SE**

(72) Inventeurs:
• **BAUDRY, Gilles**
**F-57050 Ban Saint Martin (FR)**
• **BELLUS, Jacques**
**F-30900 Nîmes (FR)**
• **GIRODIN, Daniel**
**F-74150 Marcellaz Albanais (FR)**
• **DUDRAGNE, Gilles**
**F-74540 Alby sous Cheran (FR)**
• **JACOB, Gérard**
**F-21500 Montbard (FR)**

(74) Mandataire: **Bouget, Lucien et al**
**Cabinet Lavoix**
**2, Place d'Estienne d'Orves**
**75441 Paris Cédex 09 (FR)**

(56) Documents cités:
EP-A- 0 721 996      FR-A- 2 177 214
GB-A- 1 512 323      US-A- 3 663 314
US-A- 4 077 812

• PATENT ABSTRACTS OF JAPAN vol. 098, no. 003, 27 février 1998 (1998-02-27) & JP 09 302444 A (KAWASAKI STEEL CORP), 25 novembre 1997 (1997-11-25)
• PATENT ABSTRACTS OF JAPAN vol. 098, no. 003, 27 février 1998 (1998-02-27) & JP 09 302443 A (KAWASAKI STEEL CORP), 25 novembre 1997 (1997-11-25)
• PATENT ABSTRACTS OF JAPAN vol. 014, no. 227 (C-0718), 15 mai 1990 (1990-05-15) & JP 02 054739 A (KOBE STEEL LTD), 23 février 1990 (1990-02-23)
• CHEMICAL ABSTRACTS, vol. 124, no. 2, 8 janvier 1996 (1996-01-08) Columbus, Ohio, US; abstract no. 12893, XU, L. ET AL: "Wear performance of 0.6%Cr alloyed cast and heat treated steels with carbon contents of 0.7, 1.0, and 1.3%" XP002094915 & MATER. SCI. TECHNOL. (1995), 11(8), 787-90 CODEN: MSCTEP;ISSN: 0267-0836,1995,

EP 1 114 199 B1

**Description**

L'invention est relative à un acier à roulement et à un roulement pouvant travailler à des niveaux de chargement élevés.

Les roulements à billes ou à rouleaux sont bien connus. Ils sont, en général, constitués de pièces en acier à roulement du type 100Cr6 contenant de 0,6 à 1,5 % de carbone, de 1,3 à 1,6 % de chrome, de 0,3 à 1 % de manganèse et moins de 0,4 % de silicium, le reste étant des impuretés résultant de l'élaboration. En particulier, par le document US 3,663,314 on connaît un acier à roulements contenant de 0,6 à 0,78% de C, de 0,5 à 2% de Cr, de 0,4 à 1,15% de Mn et de 1 à 2% de Si. Par le document JP 09 302443 on connaît un acier à roulement contenant de 0,7 à 0,8% de C, de 0,75 à 1% de Si, de 0,4 à 2% de Mn, et de 0,4 à 0,95% de Cr. Par le document JP 09 302444 on connaît un acier à roulement contenant de 0,8 à 0,95% de C, de 0,75 à 1% de Si, de 0,4 à 2% de Mn et de 0,2% à 0,4% de Cr. Dans les zones de contacte des différentes pièces, l'acier est soumis à des contraintes de Hertz importantes qui, du fait de la rotation du roulement, engendrent des phénomènes de fatigue de roulement. Ces phénomènes de fatigue de roulement conduisent à la destruction du roulement au bout d'un temps fonction des conditions de chargement du roulement. Afin d'assurer une durée de vie suffisante, on dimensionne les roulements de façon telle que la contrainte maximale de Hertz reste inférieure à une valeur fonction de la résistance à la fatigue de l'acier utilisé et de la durée de vie minimale souhaitée. Par ailleurs, les déformations des roulements engendrées par les efforts qu'ils supportent, accroissent les phénomènes de détérioration par fatigue. Pour limiter cet effet défavorable, les roulements sont dimensionnés de manière à limiter les déformations à des valeurs faibles. Ces deux conditions conduisent à limiter les possibilités d'alléger les roulements. En effet, pour une application donnée, plus les roulements sont légers, plus les efforts spécifiques qu'ils doivent supporter sont importants. Ces limites apportées au dimensionnement des roulements présentent des inconvénients, notamment lorsqu'il est souhaitable de réduire la dimension ou le poids des mécanismes auxquels ils sont incorporés. C'est le cas, notamment, des roues de véhicules, lorsqu'on veut améliorer la tenue de route en diminuant le poids des masses non suspendues.

Le but de la présente invention est de remédier à cet inconvénient en proposant un acier à roulement dont la tenue à la fatigue est améliorée par rapport à celle des aciers à roulement connus, et ainsi de permettre d'utiliser des roulements plus légers que ceux qui sont utilisés actuellement. De plus, on a recherché un acier qui présente une bonne aptitude à la coulée et à la transformation à chaud comme à froid, et qui ne nécessite que des traitements thermiques en cours de fabrication ou en final relativement standards.

A cet effet, l'invention a pour objet un acier pour la fabrication d'une pièce pour roulement, comme défini dans la revendication 1.

De préférence, la composition chimique est telle que, séparément, ou mieux encore, simultanément, d'une part :

$$0,8 \% \leq Mn \leq 1,2\%$$

$$0,8 \% \leq Si \leq 1,7\%$$

et d'autre part :

$$0,9 \% \leq C \leq 1,1 \%$$

$$1,3 \% \leq Cr \leq 1,6 \%$$

De préférence également la teneur en silicium doit être supérieure à 1,2 %.

L'invention concerne également un procédé pour la fabrication d'une pièce pour roulement selon la revendication 7.

L'invention concerne aussi un tube sans soudure ainsi qu'une pièce pour roulement en acier selon l'invention ayant une structure constituée de martensite, de carbures résiduels et de 5 % à 30 % d'austénite résiduelle.

Un tel roulement constitué de pièces selon l'invention, a pour des conditions de travail correspondant à une contrainte maximale de Hertz pouvant atteindre 4,5 GPa et une déformation pouvant atteindre 150 µm, une durée de vie L10 au moins 4 fois supérieure à celle obtenue avec de l'acier 100Cr6 utilisé dans les mêmes conditions de chargement.

L'invention va maintenant être décrite plus en détails et illustrée par des exemples.

Pour fabriquer un roulement comportant des pièces de roulement telles que des bagues et des corps roulants ayant une bonne résistance à la fatigue, on utilise un acier dont la composition chimique comprend, en poids :

- plus de 0,6 % et, de préférence plus de 0,9 % de carbone pour obtenir une dureté suffisante et un taux d'austénite résiduelle suffisant, mais moins de 1,5 % et, de préférence, moins de 1,1 % pour éviter la formation de ségrégations trop importantes et pour limiter la formation de carbures primaires,
- plus de 0,75 %, et, de préférence, plus de 0,8 %, et mieux encore, plus de 1,2 % de silicium, de façon à augmenter la stabilité à chaud de l'austénite résiduelle (entre 170°C et 450 °C, environ, et de préférence au dessus de 300 °C) et la dureté, mais, moins de 2,5 %, et de préférence, moins de 1,7 %, car lorsque la teneur en silicium est trop élevée, l'acier devient trop fragile notamment pour pouvoir être mis en forme par déformation plastique,
- plus de 0,4 % de manganèse, et de préférence, plus de 0,8 % pour pouvoir obtenir une structure trempée ayant une teneur en austénite résiduelle supérieure à 5 % et de préférence supérieure à 15 % ; la teneur en manganèse doit être telle que : $Mn \leq 0{,}75 + 0{,}55 \times Si$ pour obtenir une bonne coulabilité sans laquelle il devient difficile d'obtenir un acier suffisamment propre pour qu'il ait une bonne résistance à la fatigue de roulement, et telle que : $Mn \leq 2{,}5 - 0{,}8 \times Si$ pour permettre les opérations de parachèvement et la mise en forme par déformation plastique à froid ; il résulte de ces relations que la teneur en manganèse doit être inférieure à 1,5 %, et il est préférable qu'elle soit inférieure à 1,2 %,
- de 0,2 %à 2 % de chrome, et , de préférence, de 1,3 % à 1,6 %, de façon, d'une part à obtenir une trempabilité suffisante, et, d'autre part, à former des semis de carbures globulaires de taille inférieure à 2 $\mu m$, uniformément répartis et en quantité suffisante,
- moins de 0,5 % de nickel, élément résiduel qui n'est pas indispensable mais qui a un effet favorable sur la trempabilité,
- moins de 0,2 % de molybdène, élément qui ralentit l'adoucissement au revenu,
- entre 0 % et 0,05 % d'aluminium et moins de 0,04 % de soufre,
- moins de 0,0009 % d'oxygène pour obtenir une propreté inclusionnaire suffisante, le reste étant du fer et des impuretés résultant de l'élaboration.

Par ailleurs, pour obtenir une bonne endurance, la propreté inclusionnaire de l'acier est telle que, mesurée par la méthode A de la norme ASTM E 45, les conditions suivantes sont satisfaites :

- inclusions de type A, fines : indice $\leq 2{,}5$
- inclusions de type A, épaisses : indice $\leq 1{,}5$
- inclusions de type B, fines : indice $\leq 1{,}5$
- inclusions de type B, épaisses : indice $\leq 0{,}5$
- inclusions de type C, fines : indice $= 0$
- inclusions de type C, épaisses : indice $= 0$
- inclusions de type D, fines : indice $\leq 0{,}5$
- inclusions de type D, épaisses : indice $\leq 0{,}5$

Les inclusions de type A étant essentiellement des sulfures,
Les inclusions de type B étant essentiellement des aluminates,
Les inclusions de type C étant essentiellement des silicates,
Les inclusions de type D étant des inclusions globulaires.

Cet acier est coulé, et, éventuellement, laminé pour fabriquer un demi-produit qui peut être une billette ou un rond à tube.

Le demi produit est alors mis en forme par déformation plastique à chaud pour obtenir une ébauche de produit, par exemple, par laminage à chaud pour obtenir un fil machine, un rond ou un tube sans soudure.

L'ébauche de produit est alors soumise à un traitement thermique de globulisation consistant en un ou plusieurs chauffages à une température comprise 750 °C et 850°C suivi de refroidissements dont la vitesse maximale est de 10 °C/heure jusqu'à 650 °C, afin d'obtenir une structure de dureté inférieure à 270 HV et comportant une fine dispersion de carbures. Ce traitement thermique est nécessaire pour conférer à l'acier une bonne aptitude à la mise en forme par déformation plastique à froid et une bonne usinabilité, procédé utilisé pour fabriquer, par exemple, par laminage à froid, par étirage à froid ou par tréfilage, un produit. Ce produit sert à fabriquer les ébauches de pièces, par exemple, les ébauches de billes, de rouleau ou de bagues de roulement.

La fabrication des ébauches de pièces, qui se fait par mise en forme à froid ou à chaud ou par tréfilage ou par usinage de tronçons découpés dans le produit, se termine par un traitement thermique constitué d'une trempe et d'un revenu. On obtient, ainsi, une pièce pour roulement. La température d'austénitisation avant trempe, supérieure à 800 °C, est ajustée de façon à obtenir après la trempe une structure constituée de martensite, de 5% à 30% d'austénite résiduelle et d'une répartition homogène de carbures résiduels. Le taux d'austénite résiduelle dont la présence est indispensable pour obtenir une bonne résistance à l'indentation dépend de la valeur du point Ms (température de début de transformation martensitique) qui dépend, elle même, à la fois de la composition de l'acier et des conditions d'austénitisation. L'homme du métier sait déterminer ces paramètres, par exemple à l'aide d'essais dilatométriques. Le revenu est effectué par chauffage au dessus de 100 °C afin de stabiliser la structure, mais inférieure à 400 °C et de préférence inférieure à 250 °C pour ne pas déstabiliser l'austénite résiduelle.

L'acier ainsi obtenu a, à dureté égale de 62 HRC, une résistance à la fatigue sensiblement améliorée par rapport à l'acier 100Cr6 ayant la même propreté inclusionnaire que l'acier selon l'invention. Cette tenue à la fatigue est bien mise en évidence à l'aide d'essais en fatigue de compression sur des plots de compression de 7 mm de diamètre, comportant 4 facettes de 3 mm de largeur, et hauts de 12 mm. Ces plots sont soumis à des efforts de compression périodiques faisant varier la contrainte entre 2450 MPa et 50 MPa, et on détermine le nombre de cycles au bout du quel le plot est rompu. Les essais de fatigue ayant, par nature un caractère statistique, on recommence les essais plusieurs fois.

Les compositions chimiques des aciers testés à titre de premier exemple étaient (« inv »=acier selon l'invention;« comp »=100Cr6 à titre de comparaison) :

|  | C | Si | Mn | Ni | Cr | Mo | Al | S | O |
|---|---|---|---|---|---|---|---|---|---|
| inv. | 1,011 | 1,53 | 1,00 | 0,16 | 1,44 | 0,030 | 0,039 | 0,03 | 2,7m |
| comp. | 1,012 | 0,23 | 0,33 | 0,33 | 1,43 | 0,027 | 0,036 | 0,011 | 3,8m |

Les propretés inclusionnaires étaient :

|  | type A | | type B | | type C | | type D | |
|---|---|---|---|---|---|---|---|---|
|  | mince | épaisse | mince | épaisse | mince | épaisse | mince | épaisse |
| inv. | 1,5 | 0,5 | 1 | 0 | 0 | 0 | 0,5 | 0 |
| comp. | 2 | 0,5 | 1 | 0 | 0 | 0 | 0,5 | 0 |

Les résultats ont été les suivants :

| Acier selon l'invention | |
|---|---|
| | plot n°1 : Non rompu après   111 111 000 cycles |
| | plot n°2 : Rompu à   41 111 000 cycles |
| | plot n°3 : Non rompu après   111 111 000 cycles |
| | plot n°4 : Rompu à   51 111 000 cycles |
| Acier 100Cr6 selon l'art antérieur | |
| | plot n°1 : Rompu à   16 630 000 cycles |
| | plot n°2 : Rompu à   31 111 000 cycles |
| | plot n°3 : Rompu à   20 788 000 cycles |
| | plot n°4 : Rompu à   21 111 000 cycles |

De ces résultats il est possible de déduire que la limite d'endurance de l'acier selon l'invention est supérieure de 17 % à celle de l'acier 100Cr6, soit un gain d'environ 400 MPa.

A titre de deuxième exemple, avec l'acier selon l'invention, on a fabriqué un roulement pour roue, comportant deux rangées de rouleaux coniques et on l'a testé avec une charge radiale Fr = 590 daN correspondant à une accélération de 0,6 G et une charge axiale Fa = 354 daN. Ces charges induisaient une déformation radiale de 0,14 mm (alors que les règles de conception actuelles n'admettent pas, pour cette application, des déformations supérieures à 0,04 mm), et une contrainte maximale de Hertz, calculée sans tenir compte des déformations, Po = 3,4 GPa. Les pièces du roulement ont subi une trempe étagée après austénitisation à 890 °C, puis revenues à 230°C de façon à obtenir une teneur en austénite résiduelle d'environ 17 %. Puis on a testé les roulements sur un banc d'essai de façon à mesurer la grandeur L10 correspondant à la durée d'essai conduisant à l'endommagement de 10 % des roulements. Le paramètre L10 est calculé selon la théorie statistique de WEIBULL sur un minimum de 8 roulements d'essai.

A titre de comparaison, on a réalisé des roulements identiques en acier 100Cr6, trempé après austénitisation à 835 °C et revenu à 170 °C, conformément à l'art antérieur. Ces roulements ont été testés dans les mêmes conditions que les précédents.

La propreté inclusionnaire était, dans les deux cas, conforme à l'invention.

Les résultats ont été les suivants :

|  | Acier selon l'invention | | | 100Cr6 |
|---|---|---|---|---|
| % austénte résiduelle | 17 % | 19 % | 16 % | 6 % |
| L10 | 85 h | 109 h | 220 h | 43 h |

Ces résultats montrent l'accroissement très sensible de durée de vie résultant de la meilleur tenue à la fatigue de l'acier selon l'invention.

Par ailleurs, les durées de vie mesurées peuvent être comparées aux résultats durée de vie utilisés conformément à l'état de l'art pour dimensionner les roulements pour chaque application particulière. Pour le 100Cr6 classique, ces résultats ne sont valables que pour des taux de chargement conduisant à des contraintes maximales de Hertz inférieures à 3,5 GPa, et à des déformations inférieures à 50 µm. Dans cet exemple, la durée de vie évaluée a priori, conformément à l'art antérieur, aurait été supérieure à 80 h, ce qui aurait été considéré comme suffisant. Mais, les essais présentés ci-dessus, montrent que ces prévisions auraient été fausses pour l'acier 100Cr6 selon l'art antérieur, alors qu'elles sont valables pour l'acier selon l'invention.

A titre de troisième exemple, on a testé sur banc d'essai des roulements à rouleaux cylindriques pour boite de vitesse relativement peu rigides, car de faible épaisseur (3,2 mm) réalisés d'une part en acier selon l'invention, d'autre part en acier 100Cr6, avec une charge radiale de 3000 daN conduisant à une contrainte maximale de Hertz calculée sans tenir compte des déformations (c'est à dire sous estimée) de 3,8 Gpa, et à une déformation de 55 µm. L'acier selon l'invention avait une dureté de 61,5 HRC et un taux d'austénite résiduelle comprise entre 12 % et 14%, le 100Cr6 avait une dureté de 62 HRC et un taux d'austénite résiduelle compris entre 5 et 8 %. La propreté inclusionnaire était, dans les deux cas, conforme à l'invention. Les roulements ont été testé à 100 °C avec une vitesse de rotation de 900 tours/mn. Les roulements conformes à l'invention ont eu une durée de vie L10 supérieure à 150 heures, alors que la durée de vie L10 des roulements en 100Cr6 était comprise entre 25 et 60 heures seulement.

## Revendications

1. Acier pour la fabrication d'une pièce pour roulement **caractérisé en ce que** sa composition chimique comprend, en poids :

$$0,6\ \% \leq C \leq 1,5\ \%$$

$$0,4\ \% \leq Mn \leq 1,5\ \%$$

$$0,75\ \% \leq Si \leq 2,5\ \%$$

$$0,2\ \% \leq Cr \leq 2\ \%$$

$$0\ \% \leq Ni \leq 0,5\ \%$$

$$0\ \% \leq Mo \leq 0,2\ \%$$

$$0 \ \% \leq Al \leq 0,05 \ \%$$

$$S \leq 0,04 \ \%$$

$$O < 0,0009 \ \%$$

le reste étant du fer et des impuretés résultant de l'élaboration, la composition satisfaisant les relations :

$$Mn \leq 0,75 + 0,55 \ x \ Si$$

$$Mn \leq 2,5 - 0,8 \ x \ Si$$

la propreté inclusionnaire de l'acier, mesurée selon la méthode A de la norme ASTM E 45 satisfaisant, en outre, les conditions suivantes :

- inclusions de type A, fines : indice $\leq$ 2,5
- inclusions de type A, épaisses : indice $\leq$ 1,5
- inclusions de type B, fines : indice $\leq$ 1,5
- inclusions de type B, épaisses : indice $\leq$ 0,5
- inclusions de type C, fines : indice = 0
- inclusions de type C, épaisses : indice = 0
- inclusions de type D, fines : indice $\leq$ 0,5
- inclusions de type D, épaisses : indice $\leq$ 0,5

à l'exclusion des aciers contenant de 0,55 à 0,78% de C, de 0,5 à 2% de Cr, de 0,1 à 1,15% de Mn et de 1 à 2% de Si, le reste étant du fer et des impuretés résiduelles; à l'exclusion des aciers contenant de 0,7 à 0,8% de C, de 0,5 à 1% de Si, de 0,1 à 2% de Mn, de 0,4 à 0,95% de Cr, moins de 0,050% d'Al et moins de 0,0030% d'O, le reste étant du fer et des impuretés; et à l'exclusion des aciers contenant de 0,8 à 0,95% de C, de 0,5 à 1% de Si, de 0,1 à 2% de Mn de 0,15% à 0,4% de Cr, moins de 0,050% d'Al et moins de 0,0030% d'O, le reste étant du fer et des impuretés.

**2.** Acier selon la revendication 1 **caractérisé en ce que** sa composition chimique est telle que :

$$0,8 \ \% \leq Mn \leq 1,2 \ \%$$

$$0,8 \ \% \leq Si \leq 1,7 \ \%$$

**3.** Acier selon la revendication 1 ou 2 **caractérisé en ce que** sa composition chimique est telle que :

$$Si \geq 1,2 \ \%$$

**4.** Acier selon la revendication 1 **caractérisé en ce que** sa composition chimique est telle que :

$$0,9 \ \% \leq C \leq 1,1 \ \%$$

$$1,3 \ \% \leq Cr \leq 1,6\%$$

**5.** Acier selon la revendication 4 **caractérisé en ce que** sa composition chimique est telle que :

$$0,8 \% \leq Mn \leq 1,2 \%$$

$$0,8 \% \leq Si \leq 1,7 \%$$

**6.** Acier selon la revendication 4 ou 5 **caractérisé en ce que** sa composition chimique est telle que :

$$Si \geq 1,2 \%$$

**7.** Procédé pour la fabrication d'une pièce pour roulement **caractérisé en ce que** :

- on met en forme par déformation plastique à chaud un demi-produit en acier selon l'une quelconque des revendications 1 à 6, afin d'obtenir une ébauche de produit, et, plus particulièrement, une ébauche de tube sans soudure,
- on effectue sur l'ébauche de produit un traitement de globulisation consistant en un ou plusieurs chauffages à une température comprise entre 750 °C et 850 °C suivi de refroidissements dont la vitesse maximale est de 10 °C/heure jusqu'à 650 °C, afin d'obtenir une structure de dureté inférieure à 270 HV et comportant une dispersion homogène de carbures globulaires fins, et, éventuellement, une mise en forme par déformation plastique à froid, par exemple, un laminage à froid ou un étirage à froid ou un tréfilage, de façon à obtenir un produit,
- on découpe dans le produit un tronçon qu'on met en forme par déformation plastique à froid ou à chaud, ou par usinage, afin d'obtenir une ébauche de pièce pour roulement,
- et on effectue sur l'ébauche de pièce un traitement thermique de trempe isotherme ou par refroidissement par exemple à l'huile après austénitisation entre 800 °C et 950 °C, et un traitement thermique de revenu entre 100 °C et 400 °C et de préférence en dessous de 250 °C, de façon à obtenir une pièce pour roulement ayant une structure dont la dureté est comprise entre 58 HRC et 67 HRC et qui est constituée d'une répartition homogène de carbures fins, de martensite et de 5 % à 30 % d'austénite résiduelle.

**8.** Procédé selon la revendication 7 **caractérisé en ce que** le produit est un tube sans soudure.

**9.** Tube sans soudure en acier selon l'une quelconque des revendications 1 à 6.

**10.** Pièce pour roulement en acier selon l'une quelconque des revendications 1 à 6 ayant une structure constituée d'une répartition homogène de carbures fins, de martensite et de 5 % à 30 % d'austénite résiduelle.

**11.** Pièce pour roulement en acier selon la revendication 10, **caractérisée en ce qu'**elle est obtenue par le procédé selon la revendication 7.

**12.** Roulement, **caractérisé en ce qu'**il est constitué de pièces selon la revendication 10 ou 11.

**Patentansprüche**

**1.** Stahl für die Herstellung eines Lagers, **dadurch gekennzeichnet, dass** seine chemische Zusammensetzung in Gewichtsprozent umfasst:

$$0,6 \% < C \leq 1,5 \%$$

$$0,4 \% \leq Mn \leq 1,5 \%$$

$$0,75 \% \leq Si \leq 2,5 \%$$

$$0,2\ \% \leq Cr \leq 2\%$$

$$0\ \% < Ni \leq 0,5\ \%$$

$$0\ \% \leq Mo \leq 0,2\ \%$$

$$0\ \% < Al < 0,05\ \%$$

$$S \leq 0,04\ \%$$

$$O < 0,0009\ \%$$

wobei der Rest aus Eisen und Verunreinigungen, die aus der Stahlerzeugung stammen besteht und die Zusammensetzung den Verhältnissen genügt:

$$Mn \leq 0,75 + 0,55\ x\ Si$$

$$Mn \leq 2,5 - 0,8\ x\ Si$$

die Reinheit des Stahls in Bezug auf Einschlüsse gemessen gemäß der Methode A der Norm ASTM E 45 außerdem den folgenden Bedingungen genügt:

- Einschlüsse des Typus A, fein: Index $\leq 2,5$
- Einschlüsse des Typus A, dick: Index $\leq 1,5$
- Einschlüsse des Typus B, fein: Index $\leq 1,5$
- Einschlüsse des Typus B, dick: Index $\leq 0,5$
- Einschlüsse des Typus B, fein: Index = 0
- Einschüsse des Typus C, dick: Index = 0
- Einschlüsse des Typus D, fein: Index $\leq 0,5$
- Einschlüsse des Typus D, dick: Index $\leq 0,5$ unter Ausschluss von Stählen, die 0,55 % bis 0,78 % an C, von 0,5 % bis 2 % Cr, von 0,1 % bis 1,15 % an Mn und von 1 % bis 2% an Si enthalten, während der Rest Eisen und verbleibende Verunreinigungen sind;
  unter Ausschluss von Stählen, die 0,7 % bis 0,8 % an C, von 0,5 % bis 1 % Si, von 0,1 % bis 2 % an Mn, von 0,4 bis 0,95 % an Cr, weniger als 0,050 % an Al und weniger als 0,0030 % an O enthalten, während der Rest Eisen und Verunreinigungen sind;
  und unter Ausschluss von Stählen, die 0,8 bis 0,95 % an C, von 0,5 bis 1% an Si, von 0,1 bis 2 % an Mn, von 0,15 bis 0,4 % an Cr, weniger als 0,050 % an Al und weniger als 0,0030 % an 0 enthalten, während der Rest Eisen und Verunreinigungen sind.

**2.** Stahl gemäß Anspruch 1, **dadurch gekennzeichnet, dass** seine chemische Zusammensetzung wie folgt ist:

$$0,8\ \% \leq Mn \leq 1,2\%$$

$$0,8\% \leq Si \leq 1,7\ \%$$

**3.** Stahl gemäß Anspruch 1 oder 2, **dadurch gekennzeichnet, dass** seine chemische Zusammensetzung wie folgt ist:

$$Si \geq 1,2 \%$$

**4.** Stahl gemäß Anspruch 1, **dadurch gekennzeichnet, dass** seine chemische Zusammensetzung wie folgt ist:

$$0,9 \% \leq C \leq 1,1 \%$$

$$1,3 \% \leq Cr \leq 1,6 \%$$

**5.** Stahl gemäß Anspruch 4, **dadurch gekennzeichnet, dass** seine chemische Zusammensetzung wie folgt ist:

$$0,8 \% \leq Mn \leq 1,2\%$$

$$0,8 \% \leq Si \leq 1,7 \%$$

**6.** Stahl gemäß Anspruch 4 oder 5, **dadurch gekennzeichnet, dass** seine chemische Zusammensetzung wie folgt ist:

$$Si \geq 1,2 \%$$

**7.** Verfahren für die Herstellung eines Lagers, **dadurch gekennzeichnet dass**:

- man mittels plastischer Warmverformung ein Halbprodukt aus Stahl gemäß einem der Ansprüche 1 bis 6 in Form bringt, um einen Rohling des Produkts zu erhalten, und insbesondere eine nahtlose Rohrluppe,

- man auf dem Rohling des Produktes eine Behandlung zum Kugeligglühen ausführt, die aus einem oder mehrmaligem Erhitzen auf eine Temperatur umfassend zwischen 750°C und 850°C, gefolgt von Abkühlungen, deren Maximalgeschwindigkeit 10°C/Stunde beträgt, um eine Struktur der unteren Härte von 270 HV zu erhalten, und die eine homogene Dispersion von feinem, globularem Carbid enthält und nötigenfalls ein In-Form-Bringen durch plastische Kaltverformung, z. B. ein Kaltwalzen oder ein Kaltrecken oder ein Drahtziehen, so dass man ein Produkt erhält,

- man ein Teilstück abschneidet, das man durch plastisches Kalt- oder Warmverformen in Form bringt oder durch spanende Formgebung, um einen Rohling eines Lagers zu erhalten,

- und man auf einem Rohling des Stückes eine Wärmebehandlung durch isothermisches Abschrecken oder durch Abkühlen, z. B. durch Ölkühlung nach der Austenitisierung zwischen 800°C und 950°C, und eine Anlasswärmebehandlung zwischen 100°C und 400°C und bevorzugt unter 250°C durchführt, so dass man ein Lager erhält, das eine Struktur der Härte von zwischen 58 HRC und 67 HRC umfasst und das aus einer homogenen Verteilung von feinem Carbid, von Martensit und von 5% bis 30% verbliebenem Austenit gebildet ist.

**8.** Verfahren gemäß Anspruch 7, **dadurch gekennzeichnet, dass** das Produkt ein nahtloses Rohr ist.

**9.** Nahtloses Rohr aus Stahl gemäß einem der Ansprüche 1 bis 6.

**10.** Lager aus Stahl gemäß einem der Ansprüche 1 bis 6, das eine Struktur hat, gebildet aus einer homogenen Verteilung von feinem Carbid, von Martensit und von 5 % bis 30 % verbliebenem Austenit.

**11.** Lager aus Stahl gemäß Anspruch 10, **dadurch gekennzeichnet**, das es nach dem Verfahren gemäß Anspruch 7 erhalten wird.

**12.** Lager, **dadurch gekennzeichnet**, das es aus Stücken gemäß den Ansprüchen 10 oder 11 gebildet ist.

**Claims**

1. Steel for the manufacture of a component for bearings, **characterized in that** its chemical composition comprises, by weight:

$$0.6\% \leq C \leq 1.5\%$$

$$0.4\% \leq Mn \leq 1.5\%$$

$$0.75\% \leq Si \leq 2.5\%$$

$$0.2\% \leq Cr \leq 2\%$$

$$0\% \leq Ni \leq 0.5\%$$

$$0\% \leq Mo \leq 0.2\%$$

$$0\% < Al \leq 0.05\%$$

$$S \leq 0.04\%$$

$$O < 0.0009\%$$

the balance being iron and impurities resulting from the smelting, the composition satisfying the relationships:

$$Mn \leq 0.75 + 0.55 \times Si$$

$$Mn \leq 2.5 - 0.8 \times Si$$

the cleanliness of the steel in terms of inclusions, measured according to Method A of the ASTM E 45 standard, furthermore satisfying the following conditions:

- thin, type A inclusions: index $\leq$ 2.5
- thick, type A inclusions: index $\leq$ 1.5
- thin, type B inclusions: index $\leq$ 1.5
- thick, type B inclusions: index $\leq$ 0.5
- thin, type C inclusions: index = 0
- thick, type C inclusions: index = 0
- thin, type D inclusions: index $\leq$ 0.5
- thick, type D inclusions: index $\leq$ 0.5

to the exclusion of steels containing from 0.55 to 0.78% C, from 0.5 to 2% Cr, from 0.1 to 1.15% Mn and from 1 to 2% Si, the balance being iron and residual impurities; to the exclusion of steels containing from 0.7 to 0.8% C, from 0.5 to 1% Si, from 0.1 to 2% Mn, from 0.4 to 0.95% Cr, less than 0.050% Al and less than 0.0030% O, the balance being iron and impurities; and to the exclusion of steels containing from 0.8 to 0.95% C, from 0.5 to 1% Si, from 0.1 to 2% Mn, from 0.15 to 0.4% Cr, less than 0.050% Al and less than 0,0030 % 0,
the balance being iron and impurities.

2. Steel according to Claim 1, **characterized in that** its chemical composition is such that:

$$0.8\% \leq Mn \leq 1.2\%$$

$$0.8\% \leq Si \leq 1.7\%.$$

3. Steel according to Claim 1 or 2, **characterized in that** its chemical composition is such that:

$$Si \geq 1.2\%.$$

4. Steel according to Claim 1, **characterized in that** its chemical composition is such that:

$$0.9\% \leq C \leq 1.1\%$$

$$1.3\% \leq Cr \leq 1.6\%.$$

5. Steel according to Claim 4, **characterized in that** its chemical composition is such that:

$$0.8\% \leq Mn \leq 1.2\%$$

$$0.8\% \leq Si \leq 1.7\%.$$

6. Steel according to Claim 4 or 5, **characterized in that** its chemical composition is such that:

$$Si \geq 1.2\%.$$

7. Process for the manufacture of a component for bearings, **characterized in that**:

- a semifinished product made of steel according to any one of Claims 1 to 6 is formed by hot plastic deformation so as to obtain a product blank, and more particularly a seamless tube blank;
- the product blank undergoes a spheroidizing treatment consisting of one or more heating steps at a temperature of between 750°C and 850°C followed by cooling steps, the maximum rate of which is 10°C/hour, down to 650°C, so as to obtain a structure having a hardness of less than 270 HV and a homogeneous dispersion of fine globular carbides, and, optionally, a cold plastic deformation forming step, for example cold rolling or cold drawing or wire drawing, so as to obtain a product;
- a portion is cut from the product and formed by cold or hot plastic deformation, or by machining, so as to obtain a component blank for bearings;
- and the component blank undergoes a heat treatment of isothermal tempering or by cooling, for example oil cooling, after austenization between 800°C and 950°C, and a heat treatment of annealing between 100°C and 400°C and preferably below 250°C, so as to obtain a component for bearings with a structure having a hardness of between 58 HRC and 67 HRC and consisting of a homogeneous distribution of fine carbides, of martensite and of 5% to 30% residual austenite.

8. Process according to Claim 7, **characterized in that** the product is a seamless tube.

9. Seamless tube made of steel according to any one of Claims 1 to 6.

10. Component for bearings, made of steel according to any one of Claims 1 to 6 having a structure consisting of a homogeneous distribution of fine carbides, of martensite and of 5% to 30% residual austenite.

11. Component for bearings, made of steel according to Claim 10, **characterized in that** it is obtained by the process according to Claim 7.

12. Bearing, **characterized in that** it consists of components according to Claim 10 or 11.